# EUROPEAN PATENT SPECIFICATION

(11) **EP 4 349 608 B1**
(45) Date of publication and mention of the grant of the patent: **30.07.2025**
(21) Application number: 21963122.3
(22) Date of filing: 13.12.2021
(51) Int. Cl.: B41J 29/393, H04K 3/00, B41J 2/175, H04K 1/02, G06F 21/85

(54) **CHIP, CONSUMABLE CARTRIDGE, AND DATA TRANSMISSION METHOD**
CHIP, VERBRAUCHSMATERIALPATRONE UND DATENÜBERTRAGUNGSVERFAHREN
PUCE, CARTOUCHE CONSOMMABLE ET PROCÉDÉ DE TRANSMISSION DE DONNÉES

(30) Priority: 02.11.2021 CN 202111288509
(43) Date of publication of application: 10.04.2024
(73) Proprietor: Geehy Microelectronics Inc., Zhuhai, Guangdong 519060 (CN)
(72) Inventor: LIU, Weichen, Zhuhai, Guangdong 519060 (CN)
(74) Representative: Elzaburu S.L.P.
(86) International application number: PCT/CN2021/137510
(87) International publication number: WO 2023/077616

(56) References cited:
- WO-A1-2014/201949
- WO-A1-2016/192486
- CN-A- 102 231 054
- CN-A- 104 866 253
- CN-A- 108 200 094
- CN-A- 109 409 076
- US-A1- 2004 100 359
- US-A1- 2016 357 991
- US-A1- 2017 147 842

## Description

### TECHNICAL FIELD

The present disclosure generally relates to the field of printing and image-forming technology and, more particularly, relates to a chip, a consumable cartridge, and a data transmission method.

### BACKGROUND

With development of image-forming technology, printing apparatuses such as laser printing apparatuses and inkjet printing apparatuses have been widely used. During an image-forming process, the printing apparatus may need assistance of image-forming auxiliary information of a consumable cartridge to complete the image-forming process. The image-forming auxiliary information of the printing apparatus may not only be recorded in the printing apparatus, but also recorded in a consumable chip. The consumable chip is mainly configured for identification and providing the usage of recording medium.

In some scenarios, the printing apparatus may transmit confidential data to the consumable chip. For example, when the printing apparatus authenticates the consumable chip, the printing apparatus may transmit confidential data to the consumable chip in an authentication instruction, and the confidential data may include information related to a communication password and a communication status. Nevertheless, when competitors monitor and collect communication waveforms between the printing apparatus and the consumable chip, competitors can obtain such confidential data. However, when the existing consumable chip communicates with the printing apparatus, the consumable chip, as a slave, can only passively receive such confidential data and cannot prevent the printing apparatus from transmitting such confidential data.

US 20160357991A1 discloses a system including a peripheral device and a security device. The peripheral device is accessible to one or more bus-master devices over a bus. The security device is configured to disrupt on the bus a transaction in which a bus-master device attempts to access the peripheral device without authorization, by forcing one or more dummy values on at least one line of the bus in parallel to at least a part of the transaction.

CN 109409076A discloses that before receiving a serial number verification instruction sent by a control unit of an imaging device, or during receiving a serial number verification instruction sent by a control unit of the imaging device, sending an interference signal to the verification unit of the imaging device to cause the verification unit of the imaging device to stop sending verification information; and when the serial number verification instruction is sent by the control unit of the imaging device, sending an interference signal to the verification unit of the imaging device to stop sending verification information.

US 20170147842A1 discloses a communication process between a jamming device 10 and a reader device, wherein the jamming device 10 is used to receive an interrogation signal 33 emitted from the reader device through antenna 30. When the reader device emits the interrogation signal 33 to read data, the antenna 30 of both the RFID enabled object and the jamming device 10 receive the interrogation signal 33 and generate an electrical current. In response to the generated electrical current, the circuit 20 of the jamming device 10 generates a jamming signal.

US 20040100359A1 discloses a jamming device against RFID smart tag systems. When the jamming device 30 approaches or enters the range of the scanner 16, the excitation trigger signal 18 of the scanner 16 excites or activates a plurality of jamming chips 32, so that each chip 32 emits an electromagnetic pulse signal 20.

### SUMMARY

The invention is set out in the appended set of claims. The present disclosure provides a chip, a consumable cartridge, and a data transmission method, which is beneficial for solving the problem in the existing technology that the confidential data transmitted to the chip is easily obtained by a third party, leading to confidential data leakage.

In embodiments of the present disclosure, the chip is capable of interfering preset data transmitted by the host to the chip, which prevents a third party from obtaining confidential data transmitted by the host to the chip by a mean of detecting and collecting communication waveforms between the host and the chip.

### BRIEF DESCRIPTION OF DRAWINGS

To clearly illustrate technical solutions of embodiments of the present disclosure, the drawings that need to be used in embodiments are briefly described hereinafter. Obviously, the drawings in the following description are only some embodiments of the present disclosure. For those skilled in the art, other drawings may be obtained from these drawings without creative labor.
FIG. 1 illustrates a structural schematic of a communication system provided by exemplary embodiments of the present disclosure.
FIG. 2 illustrates another structural schematic of a communication system provided by exemplary embodiments of the present disclosure.
FIG. 3 illustrates another structural schematic of a communication system provided by exemplary embodiments of the present disclosure.
FIG. 4 illustrates a circuit structural schematic of a communication system provided by exemplary embodiments of the present disclosure.
FIG. 5 illustrates a schematic of first data and second data provided by exemplary embodiments of the present disclosure.
FIG. 6 illustrates another schematic of first data and second data provided by exemplary embodiments of the present disclosure.
FIG. 7 illustrates another schematic of first data and second data provided by exemplary embodiments of the present disclosure.
FIG. 8 illustrates another schematic of first data and second data provided by exemplary embodiments of the present disclosure.
FIG. 9 illustrates another schematic of first data and second data provided by exemplary embodiments of the present disclosure.
FIG. 10 illustrates another schematic of first data and second data provided by exemplary embodiments of the present disclosure.
FIG. 11 illustrates another schematic of first data and second data provided by exemplary embodiments of the present disclosure.
FIG. 12 illustrates another schematic of first data and second data provided by exemplary embodiments of the present disclosure.
FIG. 13 illustrates another schematic of first data and second data provided by exemplary embodiments of the present disclosure.
FIG. 14 illustrates another schematic of first data and second data provided by exemplary embodiments of the present disclosure.
FIG. 15 illustrates another schematic of first data and second data provided by exemplary embodiments of the present disclosure.
FIG. 16 illustrates a schematic of an interference scenario provided by exemplary embodiments of the present disclosure.
FIG. 17 illustrates another schematic of an interference scenario provided by exemplary embodiments of the present disclosure.
FIG. 18 illustrates another schematic of an interference scenario provided by exemplary embodiments of the present disclosure.
FIG. 19 illustrates a schematic of an instruction format provided by exemplary embodiments of the present disclosure.
FIG. 20 illustrates another schematic of an instruction format provided by exemplary embodiments of the present disclosure.
FIG. 21 illustrates a structural schematic of a consumable chip provided by exemplary embodiments of the present disclosure.

### DESCRIPTION OF EMBODIMENTS

To better understand technical solutions of the present disclosure, the following describes embodiments of the present disclosure in detail with reference to accompanying drawings.

It should be noted that described embodiments are only a part of embodiments of the present disclosure, rather than all embodiments. Based on embodiments in the present disclosure, all other embodiments obtained by those skilled in the art without creative work shall fall within the protection scope of the present disclosure.

The terms used in embodiments of the present disclosure are only for the purpose of describing specific embodiments and are not intended to limit the present disclosure. The singular forms of "a", "the" and "the" used in embodiments of the present disclosure and the appended claims are also intended to include plural forms, unless the context clearly indicates other meanings.

It can be understood that the term "and/or" used in the specification may only be an association relationship describing associated objects, which means that there may be three types of relationships. For example, A and/or B can mean that: A alone exists, A and B exist at the same time, and B exists alone. In addition, the character "/" in the specification normally indicates that the associated objects before and after are in an "or" relationship.

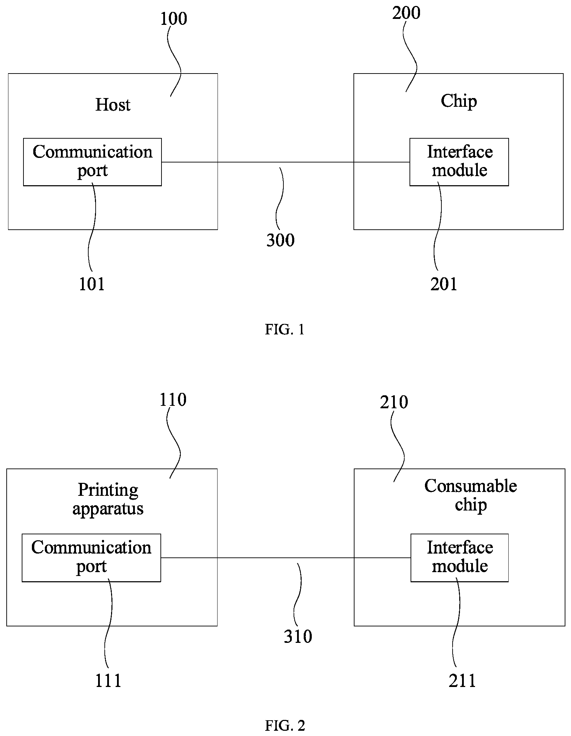

Referring to FIG. 1, FIG. 1 illustrates a structural schematic of a communication system provided by exemplary embodiments of the present disclosure. As shown in FIG. 1, the communication system may include a host 100 and a chip 200 (a slave corresponding to the host 100). The host 100 may be disposed with a communication port 101, and the slave may be disposed with an interface module 201. A communication link 300 may be established between the communication port 101 and the interface module 201. Through the communication link 300, the host 100 and the chip 200 may perform information transmission, where the communication link 300 may be a contact communication link 300, that is, a wired communication link 300. Specifically, the communication port 101 and the interface module 201 may be electrically contacted and connected through a contact pin, a contact, or an elastic piece to establish the communication link 300. The communication link 300 is referred to as a data bus. Normally, when the host 100 and the chip 200 communicate with each other, a time-division transmit/receive manner may be adopted to realize bi-directional transmitting/receiving information (that is, duplex communication). For example, in the downlink period, the host 100 may be the transmitter, and the chip 200 may be the receiver; and when the host 100 transmits a signal to the chip 200, the chip 200 as a slave may only passively receive the signal transmitted by the host 100; and in the uplink period, the chip 200 may be the transmitter, and the host 100 may be the receiver; and when the chip 200 transmits a signal to the host 100, the host 100 may only receive the signal transmitted by the chip 200. Failure to comply with such transmitting and receiving rules may result in that the signal transmitted by one party cannot be transmitted normally, and the other party cannot correctly receive the signal transmitted by the one party.

Particularly, when the input and output of the chip are both performed via the interface module 201, the interface module 201 may not both receive the input signal and output its own signal at a same time point. Therefore, in the communication protocol, it strictly requires that during the downlink period for the host to transmit a signal, the chip as the slave must only be in the receiving state of receiving signal and may be prohibited to be changed to the transmitting state of transmitting signal.

The host 100 in embodiments of the present disclosure may be a device that can implement data processing, control, or related operations; the chip 200 may be configured to be installed on the host 100 to assist the host 100 to complete related functions. For example, in the application scenario shown in FIG. 2, the host 100 may be a printing apparatus 110, and the chip 200 may be a consumable chip 210. The printing apparatus 110 may be disposed with a communication port 111, and the consumable chip 210 may be disposed with an interface module 211, and a communication link 310 may be established between the communication port 111 and the interface module 211. The printing apparatus 110 and the consumable chip 210 may transmit information through the communication link 310. For example, during the image-forming process, the consumable chip 210 may be configured to provide identification information and the status information of recording medium usage. In the existing technology, in the downlink period, the printing apparatus 110 may be the transmitter, and the consumable chip 210 may be the receiver; when the printing apparatus 110 transmits a signal to the consumable chip 210, according to the communication rule, the consumable chip 210 as a slave may only passively receive the signal transmitted by the printing apparatus 110.

For ease of description, the printing apparatus 110 and the consumable chip 210 may be used as an example to describe technical solutions provided in embodiments of the present disclosure hereinafter. However, those skilled in the art should understand that in addition to the printing apparatus 110 and the consumable chip 210, the technical solutions provided in embodiments of the present disclosure can also be applied to other types of hosts and chips, which may not be limited according to embodiments of the present disclosure.

In some scenarios, the printing apparatus 110 may transmit confidential data to the consumable chip 210. For example, when the printing apparatus 110 authenticates the consumable chip 210, the printing apparatus 110 may transmit confidential data to the consumable chip 210 in an authentication instruction; and the confidential data may include information related to a communication password and a communication status. Nevertheless, when competitors monitor and collect communication waveforms between the printing apparatus 110 and the consumable chip 210, competitors can obtain such confidential data. However, when the existing consumable chip communicates with the printing apparatus, the consumable chip, as a slave, can only passively receive such confidential data and cannot prevent the printing apparatus from transmitting such confidential data.

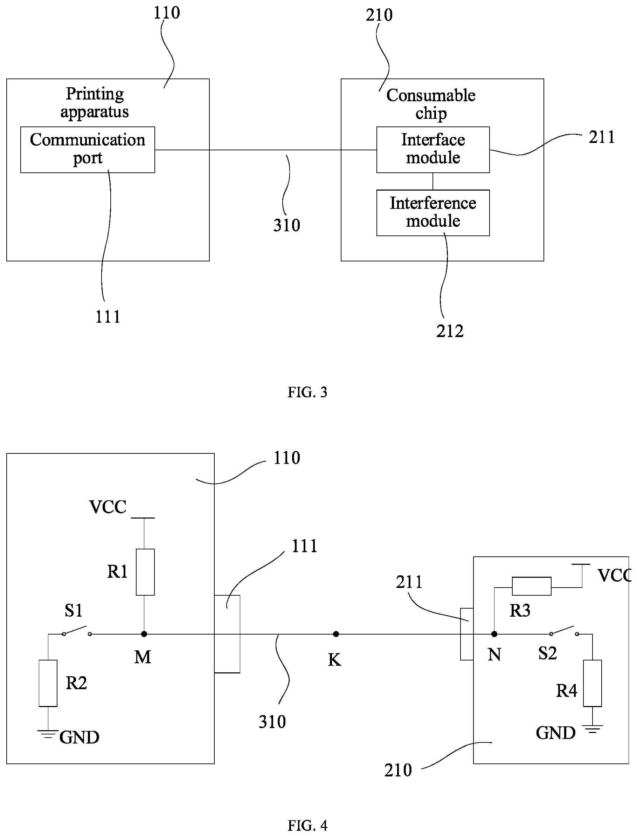

To solve the above-mentioned problem, the consumable chip 210 provided by embodiments of the present disclosure may further include an interference module 212, as shown in FIG. 3. The interference module 212 is configured to interfere the first data transmitted by the printing apparatus 110 to the consumable chip 210 via the data bus during the downlink period, such that the data detected on the data bus (that is, received by the consumable chip through the interface module 211) may be the second data, where the second data is different from the first data. The first data may be the confidential data, that is, the data that is not expected to be detected and collected on the communication link 310 by a third party. For example, the first data may be different passwords, verification data, integrity data, secret keys, and the like, and may be simply data indicating specific meanings, such as data indicating the normal operation of the chip, or certain parameter data and the like required by the chip. The data which does not want to be obtained by a third party through collecting communication process for a certain purpose may be the first data. The second data may be the data detected and collected on the communication link 310 by a third party. Since the consumable chip 210 receives data through the communication link 310 (data bus), the consumable chip 210 may also receive the second data. Specifically, when the printing apparatus 110 transmits the first data to the consumable chip 210 through the communication link 310, the consumable chip 210 may output an interference signal to the printing apparatus 110 through the interface module 211. Therefore, the first data transmitted by the printing apparatus 110 to the chip through the data bus may be interfered and affected, and a third party may be prevented from detecting and collecting the first data on the data bus between the printing apparatus 110 and the consumable chip 210, thereby ensuring security of the first data.

In a specific implementation, if serial communication is between the printing apparatus 110 and the consumable chip 210, the data bus is normally a single separate data line. For example, in the inter-integrated circuit (IIC) protocol, a power line, a clock line, a data line, and a ground line may be between the printing apparatus 110 and the consumable chip 210, respectively. At this point, the consumable chip 210 may only need to interfere the data signal on the data line, so that the first data transmitted by the printing apparatus 110 may be different from the second data on the data line. For the 1-wire protocol, the data line and other signal lines may be shared. Therefore, when the signal line is used as the data line, the consumable chip 210 may interfere the data signal on the signal line. If the data between the consumable chip 210 and the printing apparatus 110 is transmitted in parallel, the data bus may include multiple data lines. At this point, the consumable apparatus 210 may choose to interfere data signals on all data lines in all data buses or may interfere only one data signal or a part of data signals. Regardless of the form of the data bus between the printing apparatus 110 and the consumable chip 210, final implementation result is that the first data transmitted by the printing apparatus 110 may be different from the second data collected on the data bus.

The consumable chip 210 may interfere the first data transmitted by the printing apparatus 110 on the data bus, which may be that when the printing apparatus 110 transmits the first data, the level of the data bus may be changed to a low level or a high level independently of the printing apparatus 110. Normally, when the printing apparatus 110 transmits data externally during the downlink period, the level signal on the data bus may be controlled by the printing apparatus 110. If the printing apparatus 110 wants to transmit data 1, the data bus may be configured to be at a high level, and if the printing apparatus 110 wants to transmit data 0, the data bus may be configured to be at a low level. The consumable chip 210 may actively control the level signal of the data bus during the printing apparatus 110 transmits the first data and configure the data bus to be at a high level or a low level to change the data transmitted on the data bus. Therefore, the second data on the data bus may be different from the first data transmitted by the printing apparatus 110. For example, during the printing apparatus 110 transmits the first data, the data bus may be forced to be at a high level or a low level, so that the second data collected from the data bus may all be 0s or 1s. At this point, the second data received by the consumable chip may also all be 0s or 1s.

In order to explain how the interference signal prevents the printing apparatus 110 from transmitting the first data, specific circuit structures are used for description hereinafter.

FIG. 4 illustrates a circuit structural schematic of a communication system provided by exemplary embodiments of the present disclosure. As shown in FIG. 4, the printing apparatus 110 may communicate with the consumable chip 210 through contact communication (that is, in a wired manner), and the printing apparatus 110 may include the communication port 111. In a specific implementation, the communication port 111 may be a contact pin, a contact, or an elastic piece that transmits electrical signals in a contact manner. The consumable chip 210 may include the interface module 211; and the interface module 211 may be a contact pin, a contact, or an elastic piece corresponding to the communication port 111. When the consumable chip 210 is installed on the printing apparatus 110, the communication port 111 of the printing apparatus 110 may be in physical contact with the interface module 211 of the consumable chip 210, thereby forming the data bus between the consumable chip 210 and the printing apparatus 110. The data bus is shown by the communication link 310 (an SDA (serial data) line that only transmits data signals is taken an example for the communication link 310). At a signal collection point K on the communication link 310, the communication signal waveform between the printing apparatus 110 and the consumable chip 210 may be detected and collected; and the communication data may be obtained by analyzing and interpreting the signal waveform, that is, above-mentioned second data may be detected.

The communication link 310 in FIG. 4 may use the IIC communication protocol as an example for description. The printing apparatus 110 may transmit signals externally through the communication port 111; and a signal node M in the printing apparatus 110 may be connected to the communication port 111 and then be connected to a high-level signal VCC through a pull-up resistor R1. In the downlink period, a controlled switch S1 may be selectively connected to a low level according to the signal that needs to be transmitted (in FIG. 4, the ground GND may be configured as a low level; and to avoid excessive discharge current, a current-limiting resistor R2 may normally be connected in series between the controlled switch S1 and the ground GND). Therefore, the level of the signal node M may be changed according to the signal that needs to be transmitted. When the printing apparatus 110 needs to output a high level externally, the controlled switch S1 may be turned off for disconnection, and the communication port 111 connected to the signal node M may output a high level externally. When the printing apparatus 110 needs to output a low level externally, the controlled switch S1 may be turned on for connection, and the communication port 111 connected to the signal node M may output a low level externally.

Similarly, a signal node N may also be configured in the consumable chip 210; and the signal node N may be connected to the interface module 211 and then be connected to a high-level signal VCC through a pull-up resistor R3. During the uplink period, the controlled switch S2 may be selectively connected to a low level according to the signal that needs to be transmitted (in FIG. 4, the ground GND may be configured as a low level; and similarly, to avoid excessive discharge current, a current limiting resistor R4 may normally be connected in series between the controlled switch S2 and the ground GND). Therefore, the level of the signal node N may be changed according to the signal that needs to be transmitted. When the consumable chip 210 is used as a slave to receive a signal from the printing apparatus 110, that is, during the downlink period, the controlled switch S2 may be turned off for disconnection, such that the signal level on the communication link 310 may be determined by the printing apparatus 110. Those skilled in the art should know that the level of the signal collection point K on the communication link 310 (data bus) may be same as the level of the signal node N in the consumable chip 210. Therefore, changing the level of the signal node N may change the level of the communication link 310 (data bus). Since the consumable chip 210 receives data through the communication link 310 (data bus), the second data received by the consumable chip at the signal node N may be same as the above-mentioned second data detected at the signal collection point K.

From above-mentioned circuit analysis, it can be seen that, when the consumable chip 210 needs to output the interference signal or transmit data to the communication port 111 of the printing apparatus 110 through the interface module 211, the consumable chip 210 may no longer comply with the communication rules in the downlink period, change from a receiving state to an outputting state, and choose to turn on the controlled switch S2 for connection to output a low level externally. Therefore, at this point, the level on the communication link 310 may be forced to be pulled down to a low level, and the signal collected at the signal collection point K on the communication link 310 may no longer be same as the first data transmitted by the printing apparatus 110. In one embodiment, the pull-up resistor R3, the controlled switch S2, and the current-limiting resistor R4 may form the interference module 212; or the pull-up resistor R3 and the controlled switch S2 may form the interference module 212.

It can be understood that the first data transmitted by the printing apparatus to the consumable chip may normally include multiple bits. In embodiments of the present disclosure, the first data and the second data may be different, which may be that all bit values in the second data are different from corresponding values in the first data; or a part of bit values in the second data are different from corresponding values in the first data. In other words, the interference module may interfere all data in the first data or may only interfere a part of the data in the first data. For ease of description, multiple consecutive bits in the data are referred to as a bit stream in the following.

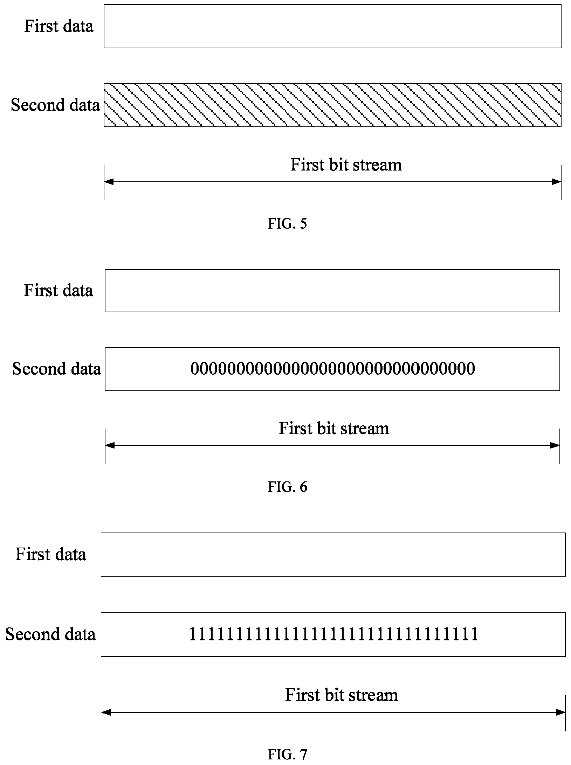

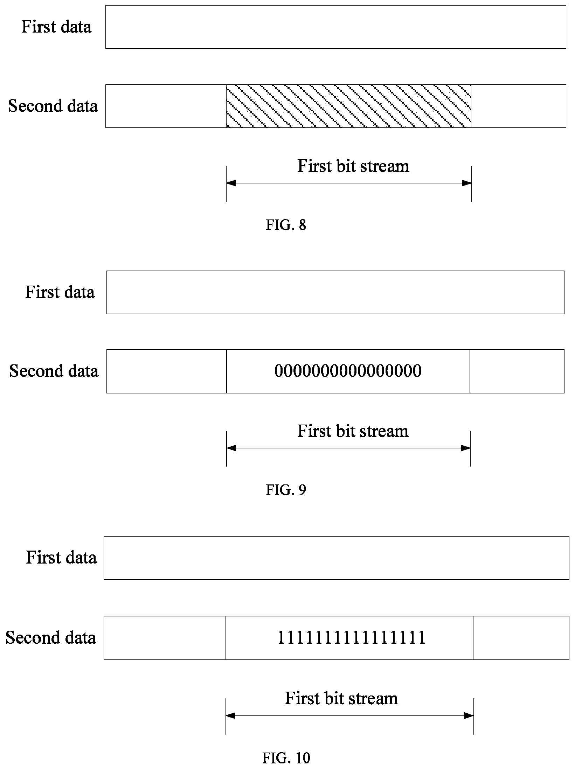

In an optional implementation manner, the second data may include the first bit stream; and the first bit stream may be the data collected by interfering the first data. The first bit stream may be all second data, that is, the proportion of the first bit stream in the second data may be 100%, as shown in FIG. 5; and the first bit stream may also be a part of the second data, that is, the proportion of the first bit stream in the second data may be less than 100%, as shown in FIG. 8. Specifically, the proportion of the first bit stream in the second data may be 40%, 50%, 70%, and the like, which may not be limited in embodiments of the present disclosure.

In a specific implementation, the first bit stream may be interfered into specific data through interference according to a protocol or a preset interference strategy.

In an optional implementation manner, the first bit stream may be interfered to have a same bit value. For example, the bit values in the first bit stream may be all 0s, as shown in FIGS. 6 and 9. In other words, no matter what the bit values of the first data are, the bit values in the first bit stream in the second data may be all 0s. Or the bit values in the first bit stream may be all 1s, as shown in FIGS. 7 and 10. In other words, no matter what the bit values of the first data are, the bit values in the first bit stream in the second data may be all 1s. It can be understood that the bit values in FIGS. 6 and 7 may correspond to FIG. 5; and the first bit stream in FIGS. 9 and 10 may correspond to FIG. 8.

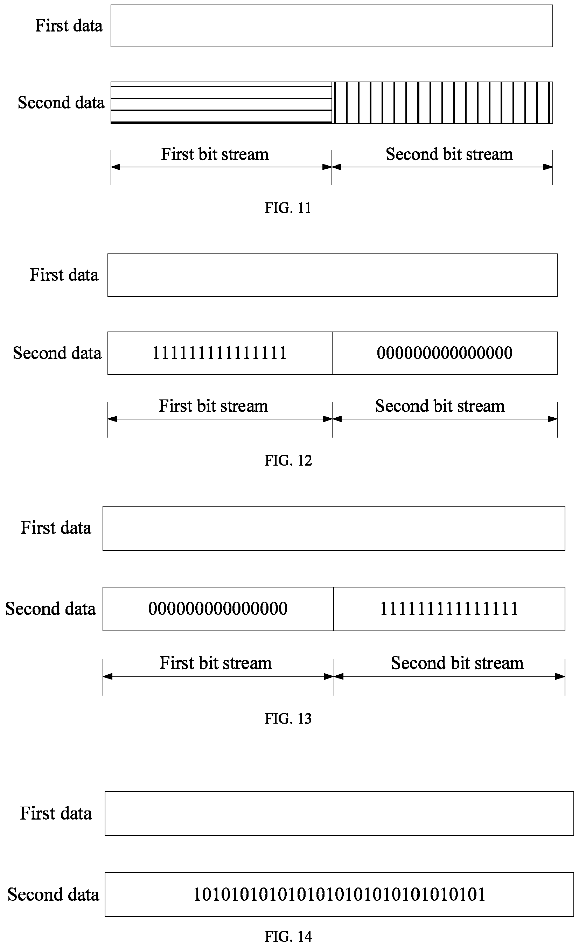

In an optional implementation manner, in addition to the first bit stream, the second data may also include the second bit stream, as shown in FIG. 11. The first bit stream may be interfered to have a same bit value and the second bit stream may be interfered to have a same bit value through interference according to a protocol or a preset interference strategy; and the bit values of the first bit stream may be different from the bit values of the second bit stream. For example, in FIG. 12, the bit values of the first bit stream may be all 1s, and the bit values of the second bit stream may be all 0s; in FIG. 13, the bit values of the first bit stream may be all 0s, and the bit values of the second bit stream may be all 1s.

In addition, in embodiments of the present disclosure, the proportions of the first bit stream and the second bit stream in the second data may be both 50%. Obviously, those skilled in the art may also set other proportions. For example, the proportion of the first bit stream in the second data may be 40%, and the proportion of the second bit stream in the second data may be 60%. Specifically, the proportions may be configured according to a protocol or an interference strategy, which may not be limited in embodiments of the present disclosure.

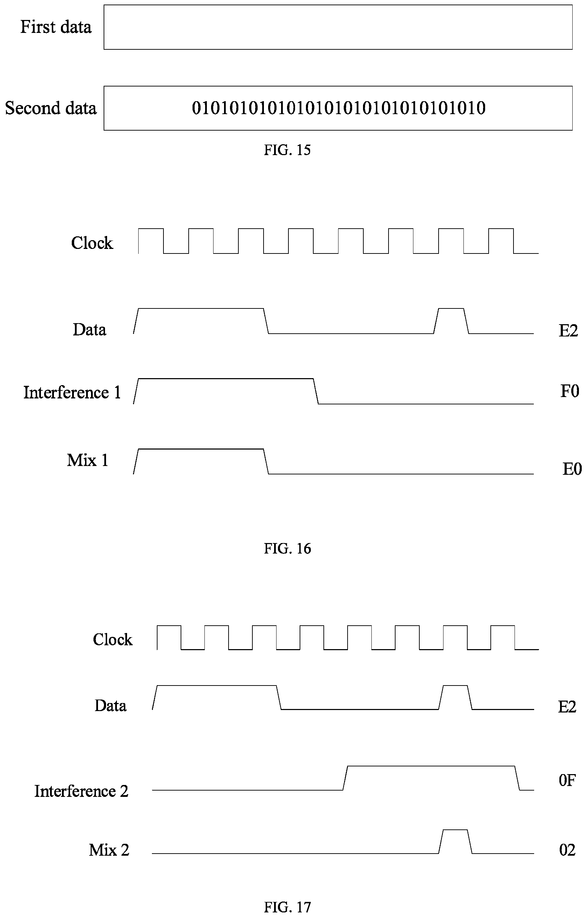

In an optional implementation manner, the odd-numbered bits and even-numbered bits in the first data may be interfered respectively to obtain corresponding second data. For example, in FIG. 14, the odd-numbered bits of the first data may be all interfered as 1, and the even-numbered bits may be all interfered as 0; and in FIG. 15, the odd-numbered bits of the first data may be all interfered as 0, and the even-numbered bits may be all interfered as 1. Obviously, those skilled in the art may also interfere only odd-numbered or even-numbered bits, which may not be limited in embodiments of the present disclosure.

To more specifically describe how the interference signal affects the transmission of the preset data (the first data), embodiments of the present disclosure describe the working principle with reference to FIGS. 16-18.

FIG. 16 illustrates a schematic of an interference scenario provided by exemplary embodiments of the present disclosure. FIG. 16 illustrates the clock signal transmitted from the printing apparatus to the consumable chip, the data signal, the first interference signal "interference 1" outputted by the consumable chip, and the first mixed signal "mix 1" (that is, the second data) that is mixture of the data signal and the first interference signal collected at the signal collection point of the communication link. In FIG. 16, the transmission of the preset data with one byte, which is 8 bits, may be taken as an example for description. The preset data (the first data) in FIG. 16 is E2 in hexadecimal numbers, which is converted into binary numbers as "1110 0010", where 1 indicates a high level, and 0 indicates a low level. Therefore, the waveform of the preset data may be the graph shown by the data line in FIG. 16.

During the downlink period, the first interference signal that the consumable chip actively outputs to the communication port of the printing apparatus may maintain the high level for the first 4 bits and pull down the last 4 bits to be the low level. Corresponding binary number may be "1111 0000" which is the hexadecimal number F0. It can be seen from the communication characteristics in FIG. 4 that when the last 4 bits are pulled down, the level of the data line may be forced to be pulled down. Therefore, the second data collected at the signal collection point of the communication link may be "1111 0000", which is the hexadecimal number E0. It should be seen that the consumable chip may output the interference signal to the printing apparatus during the downlink period, so that a third party may not detect the preset data E2 (the first data) from the communication port and detected a collected data may be E0 (the second data), thereby avoiding preset data leakage.

Similarly, in FIG. 17, during the downlink period, the second interference signal that the consumable chip actively outputs to the communication port of the printing apparatus may be that the first 4 bits may be pulled down, and the last 4 bits may remain at a high level. Corresponding binary number may be "0000 1111", which is the hexadecimal number 0F. Therefore, the first 4 bits of the preset data E2 may be forcibly pulled down, such that the collected data/second data (the second mixed data "mix 2") may be changed to 02.

In the above-mentioned example, when one byte of preset data has multiple bits, the interference signal outputted by the consumable chip may cause half of the preset data to be changed to a same value (0, that is, a low level).

In other embodiments, the preset data may include multiple bits or bytes. The interference signal outputted by the consumable chip in one embodiment may cause at least one bit in the preset data to be changed, which may also prevent preset data leakage.

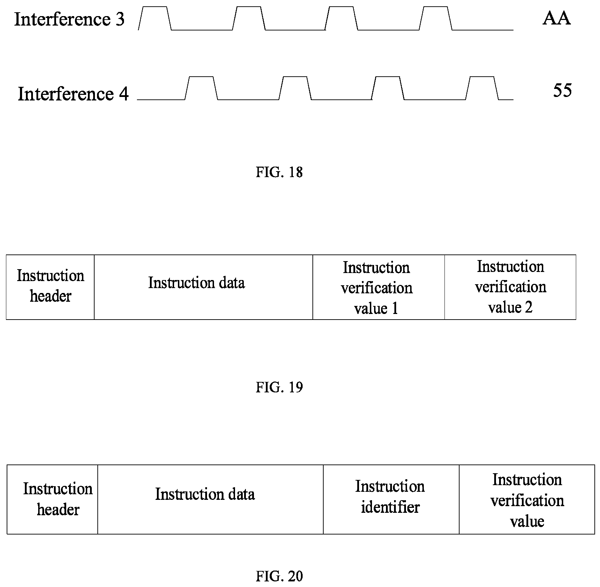

In order to make the collected signal (the second data), after the interference signal is transmitted to the printing apparatus, have identifiable characteristics, the interference signal may be selectively outputted, such that all bits of the second data may be same, for example, all bits may be all 1 or 0; or a half of the bits of the second data may be same, for example, the first half of the bits may be all 1 or 0; or the second half of the bits may be all 1 or 0. In other embodiments, when the preset data includes multiple bits, the interference signal outputted by the consumable chip may make the odd-numbered or even-numbered bits in the preset data to be changed to a same value. The third interference signal AA and the fourth interference signal 55 shown in FIG. 18 may change the odd-numbered or even-numbered bits in the preset data to a same value 0 (a low level).

Similarly, when the preset data includes multiple bytes, the interference signal outputted by the consumable chip may make the odd-numbered or even-numbered bytes in the preset data to be changed to a same value.

Although the interference signal is the low level which is taken as an example for description in above-mentioned embodiments, the interference signal may also be a high-level signal in other outputted signal structures. The high and low levels mentioned in the present disclosure refer to the definition of high and low levels in digital circuits. For example, the high level may be a voltage between 2.5-5V, and the low level may be a voltage between 0-1.5V. Furthermore, the interference signal may also be a signal that makes the level of the preset data in an unrecognizable state. For example, the transmitted level of the preset data may be interfered to be between the high level and the low level, such that the waveform detected by a third party may not be determined whether it is a high level or a low level, and the preset data may not be obtained.

It should be noted that the interference signal may not need to have a same length as the preset data. For example, in FIG. 17, the second interference signal may only output a low level in the first 4 bits, and the last 4 bits in the preset data may not be interfered. Therefore, the first interference signal may be understood as data F only including the first 4 bits. Similarly, in FIG. 16, the interference signal may only have the low level for the last 4 bits, and the length of the interference signal outputted by the consumable chip may be less than the length of the preset data.

It can be understood that the interference of the consumable chip on the data transmission in the data bus may not affect the normal communication between the printing apparatus and the consumable chip. In other words, the consumable chip may only need to interfere the first data transmitted in the data bus. Therefore, the interference timing of the consumable chip may need to be determined.

In an optional implementation, the printing apparatus may transmit the third data to the consumable chip before transmitting the first data to the consumable chip. Therefore, the consumable chip may determine whether the printing apparatus needs to transmit the first data according to the third data. The third data may be interactive authentication data or regular response data. The third data and the first data may be data in one instruction, or data in different instructions. When the third data and the first data are in one instruction, the third data may be an instruction header, and the first data may be instruction data. When the third data and the first data are in different instructions, the third data may be the data in the first instruction, the first data can be the data in the second instruction, and the first instruction may be transmitted to the chip before the second instruction.

In a specific implementation, the consumable chip may determine that the printing apparatus is ready to transmit the first data according to the length of the third data; or the consumable chip may determine that the printing apparatus is ready to transmit the first data by determining the content of the third data. For example, the address information of the first data may be given in the third data, and the consumable chip may learn from the address information that the printing apparatus is ready to transmit the first data. It may also be that the third data may include some mark data, and after receiving some mark data, the consumable chip may determine that the printing apparatus is ready to transmit the first data; or the third data may clearly indicate the first data and the like to be transmitted. The consumable chip may also determine that the current printing apparatus is ready to transmit the first data through a communication result after the printing apparatus transmits the third data. For example, the printing apparatus may first perform interactive verification of the third data with the consumable chip, and after the verification is completed, it may determine that the printing apparatus is ready to transmit the first data. As disclosed, the consumable chip may determine whether the printing apparatus needs to transmit the first data according to the third data communicated with the printing apparatus, and specific determination rule may be flexibly configured according to the communication rule between the printing apparatus and the consumable chip.

Obviously, although the printing apparatus transmits the third data to the consumable chip before transmitting the first data, the consumable chip may not determine whether the printing apparatus transmits the first data based on the third data, instead, may be determined based on other signals or signals transmitted by other lines. For example, when the third data starts to be received, it may determine whether the printing apparatus is transmitting the first data according to the clock timing, for example, according to the clock signal of the communication between the printing apparatus and the consumable chip, or changes of the electrical characteristics or changes of the electrical signals such as the power signal, the reset signal, the set signal, the data signal, and the like. As long as any signal change matches the preset determination condition in the communication between the printing apparatus and the consumable chip, the signal change may be used as the basis for the consumable chip to determine whether the printing apparatus needs to transmit the first data.

In another optional implementation, if the printing apparatus does not transmit the third data to the consumable chip before transmitting the first data, the consumable chip may determine whether the printing apparatus needs to transmit the first data by determining whether the consumable chip is powered. For example, once the consumable chip starts to be powered, the data transmitted by the printing apparatus may be interfered by default. In such way, when the printing apparatus does not transmit the third data, it may also be determined whether the printing apparatus needs to transmit the first data. The reset terminal, clock terminal and the like of the consumable chip, once there is a signal transmitted from these ports, may be configured to determine that the printing apparatus needs to transmit the first data. Obviously, it is also possible to monitor whether there is a signal at the data terminal to indicate that the printing apparatus needs to transmit the first data. There may be other electrical signal changes, such as continuous power-on and power-down (power-on refers to supplying power to the power port of the consumable chip, and power-off refers to stopping power supply to the port of the consumable chip), the voltage after the capacitor configured on the consumable chip is charged, and the like. These manners may be configured to determine whether the printing apparatus needs to transmit the first data.

After determining that the printing apparatus is ready to transmit the first data, the consumable chip may immediately interfere the first data or wait certain time duration before executing the interference, which may depend on the processing speed of the consumable chip or the settings of the consumable chip. For example, if the processing speed of the consumable chip is fast, the interference may be performed immediately after determining that the printing apparatus is ready to transmit the first data. However, if the consumable chip is limited by hardware conditions and the processing speed is slow, the consumable chip may wait certain time duration before interfering the first data after it determines that the printing apparatus is ready to transmit the first data. In the case that the conditions for determining whether the printing apparatus transmits the first data are relatively complicated, it may be preferable to interfere the last part of the first data, which may provide the consumable chip sufficient determination time, even if the consumable chip determines that the printing apparatus has already transmitted a part of the first data when the printing apparatus is transmitting the first data. The consumable chip may also choose to interfere the middle part of the first data, so that the consumable chip may end the interference to the first data in advance without affecting subsequent communication work. When the performance of the consumable chip is excellent, it may choose to interfere all the first data. In short, the first data may be interfered so that a third party may not obtain complete or accurate first data.

During the printing apparatus transmits the first data, from the perspective of the data bus, the data transmitted on the data bus may be the second data interfered by the consumable chip, which is different from the first data transmitted by the printing apparatus itself. In such way, those manners that obtain the communication data between the printing apparatus and the consumable chip by monitoring the data bus may only obtain the second data and may not obtain true and accurate first data. Obviously, the consumable chip may also actively transmit interference data to the data bus; and the interference data and the first data transmitted by the printing apparatus may be superimposed on the data bus to form the second data on the data bus.

To ensure normal communication between the consumable chip and the printing apparatus, after the consumable chip interferes the first data transmitted by the printing apparatus, the consumable chip may also need to correctly respond to various requests of the printing apparatus. All data transmitted by the printing apparatus during the downlink period may not be interfered consistently. Therefore, after the consumable chip stops interfering the first data, the consumable chip may need to respond to the printing apparatus according to the communication protocol requirement between the consumable chip and the printing apparatus, which may indicate that the consumable chip has completed receiving the first data. The response indicating that the consumable chip has completed the first data reception may mainly depend on the communication protocol requirement between the consumable chip and the printing apparatus. Different communication protocols may have different requirements, which may be configured according to actual situation. For example, in the IIC communication protocol, the consumable chip may need to reply with one response bit (ACK) for every time 8 bits transmitted, indicating that 8 bits consistent with the protocol standard have been received. Therefore, the consumable chip of the present disclosure may stop outputting the interference signal before the printing apparatus detects the response bit (ACK) of the consumable chip, thereby preventing the printing apparatus from determining that the consumable chip is abnormal.

The consumable chip provided by embodiments of the present disclosure may interfere the first data transmitted by the printing apparatus and also respond normally to operation of the printing apparatus, which may ensure the normal communication between the consumable chip and the printing apparatus and achieve that a third party cannot obtain the first data by monitoring the communication between the consumable chip and the printing apparatus.

In a specific implementation, the data transmitted by the printing apparatus to the consumable chip may be different instructions, such as read instructions, write instructions, authentication instructions, control instructions for specific operations, and the like. The first data may be a part or all of the data in the instructions.

Referring to FIG. 19, FIG. 19 illustrates a schematic of an instruction format provided by exemplary embodiments of the present disclosure. The instruction format may be applied to a serial transmission instruction of the printing apparatus to the consumable chip. The instruction format may include an instruction header, instruction data, an instruction verification value 1, and an instruction verification value 2 sequentially. In one embodiment, the instruction header may indicate the type, access address, and length of the instruction; and the instruction data may indicate the information which needs to be transmitted from the printing apparatus to the consumable chip. The instruction verification value 1 may indicate, using a certain algorithm, after the algorithm is executed on "both the instruction header and instruction data", obtained verification result which is related to both the instruction header and instruction data and configured to verify whether the data is transmitted abnormally, for example, the instruction verification value 1 may be cyclic redundancy check (CRC) of "both the instruction header and the instruction data". The instruction verification value 2 may be a further verification result that can be performed on three of "the instruction header, instruction data, and instruction verification value 1", where corresponding algorithm may be CRC or other verification algorithms.

After receiving the instruction, the consumable chip may identify each part of the instruction, and according to instruction requirement, feedback the execution result after receiving the instruction. In embodiments of the present disclosure, according to the inventor's understanding and requirement, one type of data or a part of data in "the instruction data, instruction verification value 1 and instruction verification value 2" may be regarded as confidential data, that is, the preset data (also above-mentioned first data) that is not expected to be detected and collected by a third party. For example, the instruction verification value 2 may be regarded as the preset data. Therefore, after the consumable chip determines that the printing apparatus has transmitted the instruction header, instruction data, and instruction verification value 1, the consumable chip may output the interference signal to the printing apparatus through the interface module, thereby interfering and affecting the instruction verification value 2 (that is, the preset data/first data) outputted by the printing apparatus. In such way, a third party may not detect and collect the instruction verification value 2 on the communication link between the printing apparatus and the consumable chip; the leakage of the first data may be avoided through above-mentioned manner; and the printing apparatus may be prevented from transmitting the first data externally.

In an embodiment, the instruction header, the instruction data, and the instruction verification value 1 may each have a fixed length, that is, the number of bytes. For example, the instruction header may be 8 bytes, the instruction data may be 32 bytes, the instruction verification value 1 may be 2 bytes, and the instruction verification value 2 may be 8 bytes. Therefore, when the printing apparatus finishes transmitting the third data of a preset number of bits/bytes (in one embodiment, 8+32+2=42 bytes in total) to the consumable chip, the consumable chip may output the interference signal to the communication port of the printing apparatus through the interface module. When the printing apparatus transmits 8 bytes of the instruction verification value 2 (that is, the preset data/first data) to the consumable chip, the consumable chip may output the interference signal on the communication link; therefore, the interference signal may make the 8 bytes of data detected and collected (that is, the second data mentioned above which is also be referred to collected data) by a third party from the communication link different from the instruction verification value 2 (that is, the preset data/first data).

It can be seen that, in one embodiment, if the printing apparatus starts to transmit the preset data after transmitting the preset number of bytes of the third data to the consumable chip, the interference signal outputted by the consumable chip of the present disclosure may prevent a third party from detecting the preset data from the communication port. If a third party detects and collects the preset data of the printing apparatus at the communication port of the printing apparatus at this time, the collected data (the second data) that can be detected must be different from the preset data (the first data).

The consumable chip may determine whether the printing apparatus has transmitted a preset number of bits/bytes of data to the consumable chip by counting the number of received data (in bits or bytes). In other embodiments, the consumable chip may determine when the preset data (the first data) may appear by determining the content of the instruction, the format of the instruction, and the transmitting duration of a timing instruction, thereby starting to output the interference signal. For example, in above-mentioned embodiments, the instruction verification value 2 of the preset data may be transmitted to the consumable chip after the instruction verification value 1 is transmitted; therefore, the consumable chip may determine the content of the instruction; and when it determines that the instruction verification value 1 has been transmitted, the interference signal may be outputted. For another example, if the printing apparatus transmits the instruction header, instruction data, and instruction verification value 1 for 30ms, the consumable chip may start timing when receiving the instruction and start to output the interference signal after the timing reaches 30ms.

In other embodiments, an instruction identifier may also be configured as the first data. The instruction identifier may indicate the category or order of the instruction. For example, the instruction may be an authentication instruction; and the instruction identifier may notify the consumable chip how many times the instruction is transmitted as the authentication instruction or indicate the position of the verification value.

Referring to FIG. 20, FIG. 20 illustrates another schematic of an instruction format provided by exemplary embodiments of the present disclosure. The instruction may include an instruction header, instruction data, an instruction identifier, and an instruction verification value, sequentially. In embodiments of the present disclosure, the instruction identifier may also be configured as the first data. The instruction identifier may indicate the category or order of the instruction. For example, the instruction may be an authentication instruction; and the instruction identifier may notify the consumable chip how many times the instruction is transmitted as the authentication instruction or indicate the position of the verification value. Other content of embodiments of the present disclosure may refer to the description of embodiments shown in FIG. 19, which may not be described in detail herein for brevity.

Corresponding to above-mentioned embodiments, embodiments of the present disclosure also provide another consumable chip.

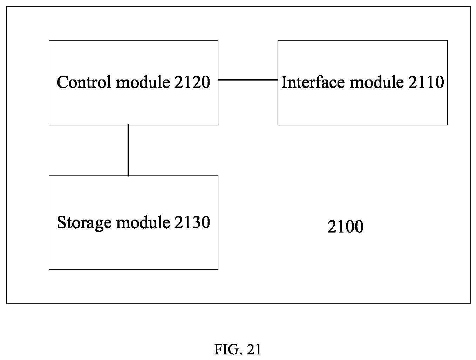

Referring to FIG. 21, FIG. 21 illustrates a structural schematic of a consumable chip provided by exemplary embodiments of the present disclosure. A consumable chip 2100 may be detachably installed on a consumable cartridge. The consumable cartridge may be an ink cartridge that contains ink, a processing cartridge that contains carbon toner, or a toner cartridge or toner cylinder that contains carbon toner. The consumable cartridge may be also detachably installed on the printing apparatus. The consumable chip 2100 may include a control module 2120, an interface module 2110, and a storage module 2130. The interface module 2110 and the storage module 2130 may all be electrically connected to the control module 2120.

The interface module 2110 may be configured for input and output communication with external equipment; and when the consumable chip is installed on the printing apparatus, the interface module 2110 may be configured to receive information/instructions transmitted by the printing apparatus and transmit information to the printing apparatus. The storage module 2130 may be configured to store information of the consumable chip, such as the manufacturing date of the consumable chip, the manufacturer, the color of recording medium (such as ink and toner), the capacity of recording medium, remaining quantity or consuming quantity of recording medium, and rewriteable or read-only information such as the number of printable pages, the number of printed pages and the like. In embodiments of the present disclosure, the storage module 2130 may also store data characteristics before and after the printing apparatus transmits the preset data (the first data), for example, the preset number of bytes before the printing apparatus transmits the preset data. The storage module 2130 may adopt a common non-volatile memory, or a combination of non-volatile memory and volatile memory.

In the storage module 2130, multiple configuration fields may be set, which may adjust the consumable chip to determine when the preset data appears. In later maintenance, by modifying the configuration fields, the preset bit/byte number or timing duration of the consumable chip may be adjusted.

The control module 2120 may be a single-chip microcomputer (MCU), a microcontroller, an FPGA, a logic circuit (ASIC) and the like, which may be configured to control communication between the consumable chip and the printing apparatus, read information from the storage module 2130, and store information in the storage module 2130. In one embodiment of the present disclosure, the control module 2120 may be configured to implement functions of the interference module described above.

The consumable chip may also include a circuit board, which may carry above-mentioned control module 2120, interface module 2110, and storage module 2130. In one embodiment, the control module 2120, the interface module 2110, and the storage module 2130 may be arranged in a same integrated circuit.

Corresponding to above-mentioned embodiments, embodiments of the present disclosure also provide a consumable cartridge installed with any one of above-mentioned consumable chips.

Corresponding to above-mentioned embodiments, embodiments of the present disclosure also provide a data transmission method. The method may include interfering the first data transmitted by the host to the chip through the data bus during the downlink period, such that the data detected on the data bus may be the second data, where the second data may be different from the first data. The specific content of method embodiments may refer to the description of above-mentioned embodiments, which may not be described in detail herein for brevity.

In a specific implementation, the present disclosure also provides a computer storage medium, where the computer storage medium may store a program, and the program may include some or all steps in embodiments provided in the present disclosure when the program is executed. The storage medium may be a magnetic disk, an optical disc, a read-only memory (abbreviated as ROM), a random-access memory (abbreviated as RAM), or the like.

In a specific implementation, embodiments of the present disclosure also provide a computer program product. The computer program product may include executable instructions, which may cause the computer to execute a part of or all steps in above-mentioned method embodiments when being executed on a computer.

In embodiments of the present disclosure, "at least one" refers to one or more, and "multiple" refers to two or more. "And/or" may describe the association relationship of the associated objects, indicating that there can be three types of relationships. For example, A and/or B may indicate the situations where A exists alone, A and B exist at the same time, and B exists alone, where A and B may be singular or plural. The character "/" may normally indicate that associated objects before and after are in an "or" relationship. "The following at least one" and similar expressions may refer to any combination of these items, including any combination of singular items or plural items. For example, at least one of a, b, and c may represent: a, b, c, a-b, a-c, b-c, or a-b-c, where a, b, and c may be singular or plural.

Those skilled in the art should understand that the units and algorithm steps described in embodiments disclosed in the present disclosure may be implemented by a combination of electronic hardware, computer software, and electronic hardware. Whether these functions are executed by hardware or software may depend on specific application and design constraint conditions of technical solutions. Those skilled in the art may use different manners for each specific application to implement described functions, but such implementation should not be considered as beyond the scope of the present disclosure.

Those skilled in the art may clearly understand that, for the convenience and conciseness of the description, specific working process of the system, apparatus and unit described above may refer to corresponding process in above-mentioned method embodiments, which may not be described in detail herein.

In some embodiments provided by the present disclosure, if any function is implemented in the form of a software functional unit and sold or used as an independent product, it may be stored in a computer readable storage medium. Based on such understanding, technical solutions of the present disclosure may be embodied in the form of a software product in essence or the part that contributes to the existing technology or the part of the technical solutions. The computer software product may be stored in a storage medium and include a plurality of instructions to enable a computer device (which may be a personal computer, a server, a network device, or the like) to perform all or a part of the steps of the methods described in various embodiments of the present disclosure. The above-mentioned storage media may include different media that can store program codes, including U disks, mobile hard disks, read-only memory (ROM), random access memory (RAM), magnetic disks, or optical disks.

The above are only specific embodiments of the present disclosure. Changes or substitutions which can be easily thought by those skilled in the art within the technical scope disclosed by the appended

## Claims

1. A chip (200), configured to communicate with a host (100), wherein the chip (200) is configured to:
establish a communication connection with the host (100) through a data bus and receive first data transmitted from the host (100) to the chip (200), wherein
the chip (200) interferes the first data through interfering the data bus during a downlink period of receiving the first data, such that data detected on the data bus is second data, wherein the second data received by the chip (200) is different from the first data.

2. The chip (200) according to claim 1, wherein:
a part of or all bit values in the second data are different from the first data.

3. The chip (200) according to claim 2, wherein:
the second data comprises a consecutive first bit stream, and all bit values of the first bit stream are same.

4. The chip (200) according to claim 3, wherein:
all bit values of the first bit stream are 0 or 1.

5. The chip (200) according to claim 3, wherein:
the second data further comprises a consecutive second bit stream, all bit values of the second bit stream are same, and bit values of the first bit stream are different from bit values of the second bit stream.

6. The chip (200) according to claim 2, wherein:
all bit values of odd-numbered bits in the second data are same; or
all bit values of even-numbered bits in the second data are same; or
all bit values of odd-numbered bits in the second data are same, all bit values of even-numbered bits in the second data are same, and bit values of the odd-numbered bits in the second data are different from bit values of the even-numbered bits in the second data.

7. The chip (200) according to claim 1, wherein interfering, by the chip (200), the first data through interfering the data bus during the downlink period of receiving the first data comprises:
during the downlink period of receiving the first data, interfering the first data, by the chip (200), through outputting a high level and/or a low level to the data bus.

8. The chip (200) according to claim 7, wherein interfering the first data, by the chip (200), through outputting the high level and/or the low level to the data bus comprises:
interfering the first data through outputting a continuous high level to the data bus; and/or interfering the first data through outputting a continuous low level to the data bus; or
interfering the first data through outputting a high/low level signal corresponding to interference data to the data bus.

9. The chip (200) according to claim 1, wherein:
the chip (200) is also configured to receive third data transmitted by the host (100); and
interfering the first data, by the chip (200), during the downlink period of receiving the first data comprises interfering the first data after the chip (200) receives the third data.

10. The chip (200) according to claim 1, wherein interfering the first data, by the chip (200), during the downlink period of receiving the first data comprises:
interfering the first data if an electrical signal of the chip (200) matches a preset determination condition.

11. The chip (200) according to claim 10, wherein:
the electrical signal comprises one or a combination of following signals comprising a clock signal, a power signal, a reset signal, a set signal, and a data signal.

12. The chip (200) according to claim 1, wherein interfering the first data, by the chip (200), during the downlink period of receiving the first data comprises:
interfering a part of the first data, by the chip (200), during the downlink period of receiving the first data.

13. A consumable cartridge (210), comprising the chip (200) according to any one of claims 1-12.

14. A data transmission method, applied to a chip, wherein the chip is configured to be connected to a host through a data bus, the method comprising:
interfering first data transmitted by the host to the chip through interfering the data bus during a downlink period of receiving the first data, such that data detected on the data bus is second data, wherein the second data received by the chip is different from the first data.

## Patentansprüche

1. Chip (200), der konfiguriert ist, um mit einem Host (100) zu kommunizieren, wobei der Chip (200) konfiguriert ist zum:
Aufbauen einer Kommunikationsverbindung mit dem Host (100) über einen Datenbus und Empfangen von ersten Daten, die vom Host (100) an den Chip (200) übertragen werden, wobei
der Chip (200) die ersten Daten durch Stören des Datenbusses während einer Downlink-Periode des Empfangens der ersten Daten stört, sodass die auf dem Datenbus erfassten Daten zweite Daten sind, wobei die von dem Chip (200) empfangenen zweiten Daten von den ersten Daten unterschiedlich sind.

2. Chip (200) nach Anspruch 1, wobei:
ein Teil oder alle Bitwerte in den zweiten Daten sich von den ersten Daten unterscheiden.

3. Chip (200) nach Anspruch 2, wobei:
die zweiten Daten einen aufeinanderfolgenden ersten Bitstrom umfassen und alle Bitwerte des ersten Bitstroms gleich sind.

4. Chip (200) nach Anspruch 3, wobei:
alle Bitwerte des ersten Bitstroms 0 oder 1 sind.

5. Chip (200) nach Anspruch 3, wobei:
die zweiten Daten weiter einen aufeinanderfolgenden zweiten Bitstrom umfassen, alle Bitwerte des zweiten Bitstroms gleich sind und die Bitwerte des ersten Bitstroms sich von den Bitwerten des zweiten Bitstroms unterscheiden.

6. Chip (200) nach Anspruch 2, wobei:
alle Bitwerte der ungeraden Bits in den zweiten Daten gleich sind; oder
alle Bitwerte der geraden Bits in den zweiten Daten gleich sind; oder
alle Bitwerte der ungeraden Bits in den zweiten Daten gleich sind, alle Bitwerte der geraden Bits in den zweiten Daten gleich sind, und die Bitwerte der ungeraden Bits in den zweiten Daten sich von den Bitwerten der geraden Bits in den zweiten Daten unterscheiden.

7. Chip (200) nach Anspruch 1, wobei das Stören der ersten Daten durch den Chip (200) durch Stören des Datenbusses während der Downlink-Periode des Empfangens der ersten Daten Folgendes umfasst:
während der Downlink-Periode des Empfangens der ersten Daten, das Stören der ersten Daten durch den Chip (200) durch Ausgeben eines hohen Pegels und/oder eines niedrigen Pegels an den Datenbus.

8. Chip (200) nach Anspruch 7, wobei das Stören der ersten Daten durch den Chip (200) durch Ausgeben des hohen Pegels und/oder des niedrigen Pegels an den Datenbus Folgendes umfasst:
Stören der ersten Daten durch Ausgeben eines kontinuierlichen hohen Pegels an den Datenbus; und/oder Stören der ersten Daten durch Ausgeben eines kontinuierlichen niedrigen Pegels an den Datenbus; oder
Stören der ersten Daten durch Ausgeben eines Signals mit hohem/niedrigem Pegel, das den Stördaten entspricht, an den Datenbus.

9. Chip (200) nach Anspruch 1, wobei:
der Chip (200) auch konfiguriert ist, um dritte Daten zu empfangen, die von dem Host (100) übertragen werden; und
Stören der ersten Daten durch den Chip (200) während der Downlink-Periode des Empfangens der ersten Daten das Stören der ersten Daten umfasst, nachdem der Chip (200) die dritten Daten empfangen hat.

10. Chip (200) nach Anspruch 1, wobei das Stören der ersten Daten durch den Chip (200) während der Downlink-Periode des Empfangens der ersten Daten Folgendes umfasst:
Stören der ersten Daten, wenn ein elektrisches Signal des Chips (200) einer voreingestellten Bestimmungsbedingung entspricht.

11. Chip (200) nach Anspruch 10, wobei:
das elektrische Signal eines oder eine Kombination der folgenden Signale umfasst: ein Taktsignal, ein Stromsignal, ein Rücksetzsignal, ein Einstellsignal und ein Datensignal.

12. Chip (200) nach Anspruch 1, wobei das Stören der ersten Daten durch den Chip (200) während der Downlink-Periode des Empfangens der ersten Daten Folgendes umfasst:
Stören eines Teils der ersten Daten durch den Chip (200), während der Downlink-Periode des Empfangens der ersten Daten.

13. Verbrauchspatrone (210), umfassend den Chip (200) nach einem der Ansprüche 1 bis 12.

14. Datenübertragungsverfahren, angewandt auf einen Chip, wobei der Chip konfiguriert ist, um mit einem Host über einen Datenbus verbunden zu werden, das Verfahren umfassend:
Stören der vom Host an den Chip übertragenen ersten Daten durch Stören des Datenbusses während einer Downlink-Periode des Empfangens der ersten Daten, sodass die auf dem Datenbus erfassten Daten zweite Daten sind, wobei die vom Chip empfangenen zweiten Daten von den ersten Daten unterschiedlich sind.

## Revendications

1. Puce (200), configurée pour communiquer avec une hôte (100), dans laquelle la puce (200) est configurée pour :
établir une connexion de communication avec l'hôte (100) par l'intermédiaire d'un bus de données et recevoir des premières données transmises de l'hôte (100) à la puce (200), dans laquelle
la puce (200) interfère avec les premières données en interférant avec le bus de données pendant une période de liaison descendante de réception des premières données, de sorte que des données détectées sur le bus de données sont des deuxièmes données, dans laquelle les deuxièmes données reçues par la puce (200) sont différentes des premières données.

2. Puce (200) selon la revendication 1, dans laquelle :
toutes les valeurs de bits, ou une partie de celles-ci, dans les deuxièmes données sont différentes de celles des premières données.

3. Puce (200) selon la revendication 2, dans laquelle :
les deuxièmes données comprennent un premier flux de bits consécutif, et toutes les valeurs de bits du premier flux de bits sont identiques.

4. Puce (200) selon la revendication 3, dans laquelle :
toutes les valeurs de bits du premier flux de bits sont 0 ou 1.

5. Puce (200) selon la revendication 3, dans laquelle :
les deuxièmes données comprennent en outre un second flux de bits consécutif, toutes les valeurs de bits du second flux de bits sont identiques, et les valeurs de bits du premier flux de bits sont différentes des valeurs de bits du second flux de bits.

6. Puce (200) selon la revendication 2, dans laquelle :
toutes les valeurs de bits de bits impairs dans les deuxièmes données sont identiques ; ou
toutes les valeurs de bits de bits pairs dans les deuxièmes données sont identiques ; ou
toutes les valeurs de bits de bits impairs dans les deuxièmes données sont identiques, toutes les valeurs de bits de bits pairs dans les deuxièmes données sont identiques, et des valeurs de bits de bits impairs dans les deuxièmes données sont différentes de valeurs de bits de bits pairs dans les deuxièmes données.

7. Puce (200) selon la revendication 1, dans laquelle l'interférence, par la puce (200), avec les premières données en interférant avec le bus de données pendant la période de liaison descendante de réception des premières données comprend :
pendant la période de liaison descendante de réception des premières données, l'interférence avec les premières données, par la puce (200), en délivrant en sortie un niveau haut et/ou un niveau bas au bus de données.

8. Puce (200) selon la revendication 7, dans laquelle l'interférence avec les premières données, par la puce (200), en délivrant en sortie le niveau haut et/ou le niveau bas au bus de données comprend :
l'interférence avec les premières données en délivrant en sortie un niveau haut continu au bus de données ; et/ou l'interférence avec les premières données en délivrant en sortie un niveau bas continu au bus de données ; ou
l'interférence avec les premières données en délivrant en sortie un signal de niveau haut/bas correspondant à des données d'interférence au bus de données.

9. Puce (200) selon la revendication 1, dans laquelle :
la puce (200) est également configurée pour recevoir des troisièmes données transmises par l'hôte (100) ; et
l'interférence avec les premières données, par la puce (200), pendant la période de liaison descendante de réception des premières données comprend l'interférence avec les premières données après que la puce (200) reçoit les troisièmes données.

10. Puce (200) selon la revendication 1, dans laquelle l'interférence avec les premières données, par la puce (200), pendant la période de liaison descendante de réception des premières données comprend :
l'interférence avec les premières données si un signal électrique de la puce (200) correspond à une condition de détermination prédéfinie.

11. Puce (200) selon la revendication 10, dans laquelle :
le signal électrique comprend un signal ou une combinaison des signaux suivants comprenant un signal d'horloge, un signal de puissance, un signal de réinitialisation, un signal de réglage et un signal de données.

12. Puce (200) selon la revendication 1, dans laquelle l'interférence avec les premières données, par la puce (200), pendant la période de liaison descendante de réception des premières données comprend :
l'interférence avec une partie des premières données, par la puce (200), pendant la période de liaison descendante de réception des premières données.

13. Cartouche (210) de consommable, comprenant la puce (200) selon l'une quelconque des revendications 1 à 12.

14. Procédé de transmission de données, appliqué à une puce, dans lequel la puce est configurée pour être connectée à une hôte par l'intermédiaire d'un bus de données, le procédé comprenant :
l'interférence avec des premières données transmises par l'hôte à la puce en interférant avec le bus de données pendant une période de liaison descendante de réception des premières données, de sorte que des données détectées sur le bus de données sont des deuxièmes données, dans lequel les deuxièmes données reçues par la puce sont différentes des premières données.
